# EUROPEAN PATENT SPECIFICATION

(11) **EP 0 649 010 B1**
(45) Date of publication and mention of the grant of the patent: **24.03.1999**
(21) Application number: 94307476.5
(22) Date of filing: 12.10.1994
(51) Int. Cl.: G01L 9/12

(54) **Method for measuring pressure differences and device for converting displacements**
Druckdifferenzmessverfahren und Verschiebungs-Umwandlungsvorrichtung
Méthode de mesure de pressions différentielles et dispositif de conversion de déplacements

(30) Priority: 14.10.1993 JP 256198/93
(43) Date of publication of application: 19.04.1995
(73) Proprietor: FUJI ELECTRIC CO. LTD., Kawasaki 210 (JP)
(72) Inventor: Yamamoto, Toshihiro, Kawasaki-ku, Kawasaki 210 (JP); Nakamura, Satoru, Kawasaki-ku, Kawasaki 210 (JP)
(74) Representative: Bridge-Butler, Alan James

(56) References cited:
- PATENT ABSTRACTS OF JAPAN vol. 14, no. 341 (P-1081), 24 July 1990 & JP-A-21 020614 (FUJI ELECTRIC CO. LTD.), 8 May 1990,
- PATENT ABSTRACTS OF JAPAN vol. 17, no. 387 (P-1576), 2 July 1993 & JP-A-50 066168 (FUJI ELECTRIC CO. LTD.), 19 March 1993,

## Description

The present invention relates to a method for detecting pressure differences and a device for converting displacements which detects very small displacements in a diaphragm caused by pressure differences as differential changes in capacitance, and converts these changes into a unified signal in order to perform process control.

In the drawings referred to below, like numbers designate like or corresponding parts.

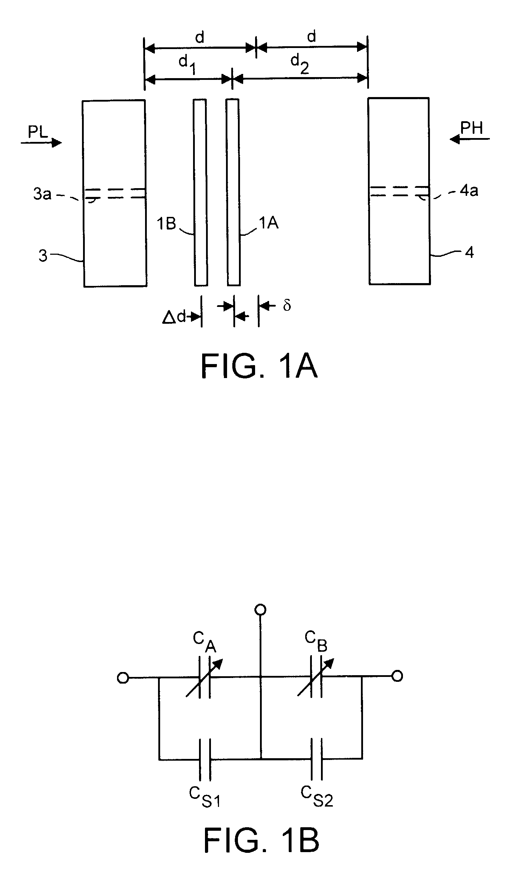

Figure 1 is a drawing for the purpose of describing a so-called parallel flat plate type of sensor comprising the following: a movable electrode comprising a planar circular diaphragm that is displaced in a direction perpendicular to its plane by a distance of Δd, which is proportional to a pressure difference p (=PH-PL) between the two surfaces; and two fixed electrodes arranged on either side of the diaphragm so that they are parallel to and face the diaphragm. The two fixed electrodes and the movable electrode (i.e. the diaphragm) form a pair of capacitors. Figure 1(A) shows the arrangement of the electrodes and Figure 1(B) shows the electrical circuit.

In Figure 1, diaphragm 1 (1A, 1B) indicates a diaphragm (movable electrode) at different displacement positions. Fixed electrodes 3, 4 are arranged on either side of diaphragm 1 so that they are parallel to the surface of diaphragm 1. PL and PH indicate the low (negative) and high (positive) pressure applied to the left and right surfaces of diaphragm 1 via small holes 3a and 4a arranged on fixed electrodes 3, 4. Distance 2d indicates the distance between the fixed electrodes 3, 4. The areas of electrodes 1, 3 and 4 are all substantially equal.

Position 1A indicates the position of diaphragm 1 when the pressures applied to diaphragm 1 are PH=PL (i.e. when pressure difference P=0). Distances d1 and d2 indicate the gaps between diaphragm 1 and respective fixed electrodes 3 and 4 when PH=PL. Similarly, δ indicates a displacement of diaphragm 1 from the centre point between fixed electrodes 3 and 4.

Position 1B indicates a position of diaphragm 1 when the applied pressure difference between the diaphragm surfaces is P=PH-PL>O. Δd is the displacement of diaphragm 1.

Referring to Figure 1(B), capacitance CA is the part of total capacitance C1 between diaphragm 1 and fixed electrode 3 that changes according to the displacement of diaphragm 1. Similarly, floating capacitance CS1 is the part of capacitance C1 that does not change according to the displacement of diaphragm 1. Capacitance CB is the part of total capacitance C2 between diaphragm 1 and fixed electrode 4 that changes according to the displacement of diaphragm 1. Floating capacitance CS2 is the part of capacitance C2 that does not change according to the displacement of diaphragm 1.

In a sensor as in Figure 1, in which diaphragm 1 is displaced relative to fixed electrodes 3 and 4 but remains parallel thereto, the capacitances can be expressed by the following equations.$\text{C1=CA+CS1= ε *A/(d1-Δd)+CS1} \text{={C00/(1-Δd/d-δ/d)}+CS1}$$\text{C2=CB+CS2= ε *A/(d2+ Δd)+CS2} \text{={C00/(1+ Δd/d+ δ /d)}1+CS2}$ Where$\text{C00= ε*A/d, d=(d1+d2)/2, δ=(d2-d1)/2}$ and d1 and d2 are the gaps between diaphragm 1 and electrodes 3 and 4, respectively, (when pressure difference P=0)
- Δd:: displacement of diaphragm (proportional to pressure difference P)
- ε:: dielectric constant of dielectric between electrodes
- A:: electrode area, and
- CS1, CS2:: floating capacitance

In past displacement converters of this type (e.g. the present applicant's Japanese patent application number 63-273120, "Displacement converter with improved linearity") two additional capacitors CC1 and CC2 were provided for compensation of floating capacitance. The capacitances (or the equivalent capacitances from combinations with resistors and the like) CC1 and CC2 were adjusted so that CC1=CS1 and CC2=CS2. A voltage having a prescribed potential and prescribed frequency was applied to capacitances C1, C2, CC1 and CC2 in order to determine (C1-CC1) and (C2-CC2) from the charge current. By dividing the difference of these two by the sum, the following operation was performed.$\text{{C1-C2-(CC1-CC2)}/{C1+C2-(CC1+CC2)}} \text{=[ Δd/d+ δ/d+[{CS1-CS2-(CC1-CC2)}/2*COO]} \text{*{1-( Δd/d+ δ/d)^2}]/} \text{[1+[{CS1+CS2-(CC1+CC2)}/2*COO]} \text{*{1-( Δd/d+ δ/d)^2}]} \text{= Δd/d+ δ/d}$ This equation makes it possible to determine a very small displacement Δd of the diaphragm, and thus determine pressure difference P of the two sides of diaphragm 1. However, the prior art method described above for determining pressure differences had the following problems.
(1) CC1 and CC2 needed to be adjusted so that CC1=CS1 and CC2=CS2. However, this adjustment was very difficult. To be specific, arbitrary values for CC1 and CC2 were chosen and the conversion characteristics were measured. The results were used to adjust the values of CC1 and CC2 (or the values of combinations with resistors). Then the conversion characteristics were measured again and confirmed. In practical terms, making high precision adjustments using this method required numerous trial-and-error attempts. Thus, much time and effort was required to make adjustments.
(2) Also, linearity was decreased because of changes in floating capacity caused by changes in temperature.
(3) With regard to temperature characteristics for zero and span, corrections were made with combinations of temperature-sensitive resistors, thermistors and the like. However, precise corrections were not possible, requiring numerous trial-and-error attempts here as well.

Thus, the object of the present invention is to provide a method for measuring pressure difference and a device for converting displacement that solves the above problems.

According to the present invention a method for measuring pressure difference by detecting very small displacements of a diaphragm (1) caused by the pressure difference and expressed as a change in capacitance in a pair of capacitors formed by the diaphragm and a pair of fixed electrodes (3, 4) arranged so as to face either side of the diaphragm is characterised by the steps of:
an initial calibration phase comprising:
determining the values corresponding to capacitances C1(P) and C2(P) of the pair of capacitors for a range of known positive and/or negative pressure differences P;
calculating the constants α and β using the determined capacitance values and pressure differences and the relationship:$\text{f(P)={C1(P)-C2(P)-α}/{C1(P)+C2(P)-β};}$
calculating the constants f(O) and KP using the determined capacitance values and pressure differences and the relationship:$\text{f(P)=KP*P+f(0);}$
and a subsequent measurement phase comprising employing the calculated constants α, β, f(O) and KP and values of the capacitances C1(P) and C2(P) determined in the measurement phase in the relationships:$\text{f(P)={C1(P)-C2(P)-α}/{C1(P)+C2(P)-β}}$ and$\text{f(P)=KP*P+f(0)}$ to determine the pressure difference P.

A second aspect of the invention provides a device for measuring pressure difference by detecting very small displacements of a diaphragm (1) caused by the pressure difference and expressed as a change in capacitance in a pair of capacitors formed by the diaphragm and a pair of fixed electrodes (3, 4) arranged so as to face either side of the diaphragm, characterised by:
means for calibrating the device comprising:
means for determining values corresponding to the capacitances C1(P) and C2(P) of the pair of capacitors for a range of known positive and/or negative pressure differences P;
first calculating means for calculating the constants α and β using the determined capacitance values and pressure differences and the relationship:$\text{f(P)={C1(P)-C2(P)-α}/{C1(P)+C2(P)-β};}$
second calculating means for calculating the constants f(O) and KP using the determined capacitance values and pressure differences and the relationship:$\text{f(P)=KP*P+f(0);}$
and means (213) for measuring pressure difference P employing the calculated constants α, β, f(O) and KP and measured values of the capacitances C1(P) and C2(P) in the relationships:$\text{f(P)={C1(P)-C2(P)-α}/{C1(P)+C2(P)-β}}$ and$\text{f(P)=KP*P+f(0)}$ to determine the pressure difference P.

The device can include means for determining a difference and a sum of the capacitance values of the pair of capacitors and for determining the capacitance value of each of the capacitors.

Means can be included for determining a difference or a sum of the capacitance values of the pair of capacitors and for determining the capacitance value of one of the capacitors.

The device may further comprise temperature-detecting means. The means for calculating the constants α and β including means for calculating the constants for each of a plurality of temperatures and the means for measuring pressure difference including means for employing the values for α and β corresponding to the detected temperature.

In a further advantageous embodiment, the device may further include temperature-detecting means (means for detecting temperature 214 or the like) and
constant-calculating means f(0), KP (microprocessor 205 or the like) corresponding to the temperature detected by pressure-difference measuring means during pressure difference measurement using constants f(0), KP calculated by a second constant-calculating means based on the calibration by temperature for a plurality of temperatures detected by temperature-detecting means. The resulting constants are used by the pressure-difference measuring means for calculating pressure difference P.

Alternatively, the device may further comprise
temperature-detecting means (temperature-detecting means 214 or the like);
means for calculating the constants α and β (microprocessor 205 or the like) corresponding to the temperature determined by temperature-detecting means during pressure difference measurement using constants α and β calculated by the first constant-calculating means based on the calibration by temperature of a plurality of temperatures detected by the temperature-detecting means; and
constant-calculating means f(0), KP (microprocessor 205 or the like) corresponding to the temperature detected by the temperature-detecting means during pressure difference measurement using constants f(0), KP calculated by second constant-calculating means based on the calibration by temperature for a plurality of temperatures detected by temperature-detecting means. The resulting constants are used by the pressure-difference measuring means to calculate measured pressure difference P.

All elements of the device, with the exception of the first constant-calculating means may be assembled as an integral device (displacement converter 200 or the like); and such a device may use the constants α and β calculated by the first constant-calculating means.

The following means are used in the present invention.
1) a microprocessor 205 serving as a calculating and control means
2) a time constant measuring unit 202 serving as capacitance-measuring means C1, C2 of the sensor capacitor
3) a time counter 206 performing A/D conversion of the time constant obtained from 2)
4) memory 204 storing the determined capacitance
5) memory 204 storing linear correction constants α and β
6) means for performing read/write operations on memory (microprocessor 205)

The following means are also used to prevent decreases in linearity due to changes in floating capacitance caused by variations in temperature:
7) a temperature-detecting means (temperature detector 214)
8) a memory 204 for storing temperature correction coefficients for α and β

The following means are also used to correct temperature characteristics for zero and span.
9) a memory 204 storing temperature correction coefficients for zero and span.

Pressure difference is measured according to the following method. Instead of using a hardware method for compensating the floating capacitances contained in capacitances C1 and C2 from the sensor capacitor, the floating capacitances are determined by performing an initial calibration in which sensor capacitor capacitances C1(P), C2(P) are measured for a plurality of known pressure differences P. This is then used to perform compensation on floating capacitance (using software methods) when pressure differences are to be measured.

In other words in operation (1) above,$\text{α =CS1-CS2, β=CS1+CS2}$ and f(P) of operation (1) becomes equivalent to when CC1=CS1, CC2=CS2 in operation (6) above,
and can be expressed as$\text{f(P)= Δd/d+ δ/d}$

In this equation, diaphragm displacement Δd is proportional to applied pressure difference P, so if a proportional constant KP is set, then$\text{Δd/d=KP*P}$

(However, this proportional constant will generally be different for the positive and negative range of pressure difference P because of the margin of error in the assembly of the diaphragm.)

Now δ/d is equivalent to f(0) when, displacement Δd=0 (i.e. when pressure difference P=0), so$\text{δ/d=f(0)}$

Therefore, f(P) fulfils the linear condition of operation (2).$\text{f(P)=KP*P+f(0)}$

Let us assume that during calibration of the displacement converter, the sensor capacitances C1(P), C2(P) were measured for three known separate pressure differences P in the positive range (P0, P1, P2), and for three known separate pressure differences P in the negative range (P3, P4, P5).

By taking the difference of the function f for the two pressure difference values P0 and P1, operation (2) shows that$\text{f(P1)-f(P0)=KP*(P1-P0)}$

Likewise, by taking the difference of function f for pressure differences P1 and P2,$\text{f(P2)-f(P1)=KP*(P2-P1)}$

The following operation (13) results from operations (11) and (12).$\text{f(P2)-f(P1)={(P2-P1)/(P1-P0)}{f(P1)-f(P0)}}$

Likewise, for pressure differences P3, P4, P5,$\text{f(P4)-f(P3)=KP*(P4-P3)}$$\text{f(P5)-f(P4)=KP*(P5-P4)}$

Operations (14) and (15) show that:$\text{f(P5)-f(P4)={(P5-P4)/(P4-P3)} {f(P4)-f(P3)}}$

Therefore, the differences and sums of sensor capacitor capacitance values C1, C2 for pressure differences P0 to P5 can be obtained, the equations in operations (13) and (16) can be solved, and the unknown constants α and β satisfying operation (8) (and therefore operation (2)) can be determined. Then a pressure difference can be determined linearly by performing operation (1) using constants α and β and capacitances C1 and C2, measured at that pressure difference.

Instead of directly measuring sensor capacitor capacitances C1 and C2, the embodiment below measures the charging times T1 and T2 of the capacitors, which are proportional to the capacitances, under prescribed circuit conditions. Then, instead of the reference operation in operation (1), the following operation is performed.$\text{f=(T1-T2-Td)/(T1+T2-Ta)}$

In this operation, Td and Ta are constants corresponding to α and β.

The various aspects of the invention will now be described with reference to the accompanying drawings, in which:
Figure 1 is a drawing for the purpose of describing the sensor using parallel flat plates of the present invention;
Figure 2 is a schematic drawing of a device for converting displacement according to an embodiment of the present invention;
Figure 3 is a flowchart indicating the operations during the measurement mode of a device for converting displacement according to an embodiment of the present invention;
Figure 4 is a flowchart indicating the operations during the correction mode of a device for converting displacement according to an embodiment of the present invention;
Figure 5 is a flowchart indicating the operations during the temperature correction and measurement mode of a device for converting displacement according to an embodiment of the present invention;
Figure 6 is a flowchart indicating the operations during the calibration of the output from the displacement converter; and
Figure 7 is a flowchart indicating the process of calculating temperature correction.

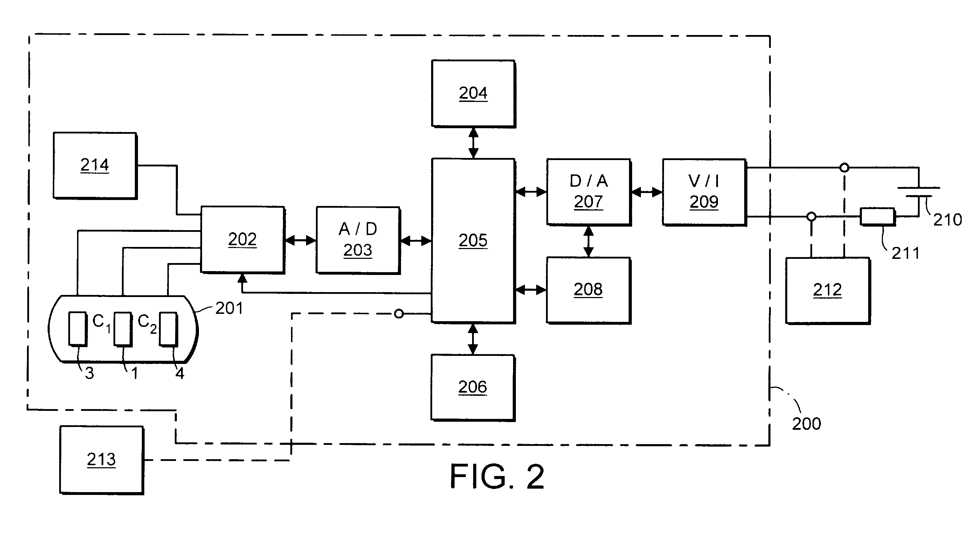

Referring now to Figures 2 to 7, the following is a description of an embodiment of the present invention. Figure 2 is a block diagram of a device for converting displacements according to an embodiment of the present invention. Referring to Figure 2, this embodiment has a displacement converter 200, a sensor 201 comprising a diaphragm 1 and fixed electrodes 3 and 4 described in Figure 1, a microprocessor 205 serving as an operation control means controlling this displacement converter, a time constant measuring unit 202 measuring capacitances C1, C2 of the sensor capacitors between diaphragm 1 and fixed electrodes 3 and 4 respectively. An A/D converter 203 performs an A/D conversion of the time constant measured by the time constant measuring unit 202 and sends the result to the microprocessor 205. A time counter 206 is used for microprocessor 205 in timing operations and the like. Memory 204 serves to provide memory for microprocessor 205 and stores various constants such as capacitance values. A D/A converter 207 converts the measured pressure difference into an analogue voltage signal. V/I converter 207 converts a voltage signal into a current signal in a range such as 4-20mA. Modem 208 produces a modulating signal when the displacement converter sends out digital data externally.

An external DC power supply 210 is located outside the displacement converter 200 and serves as the power supply for generating the current signal noted above. External load resistor 211 is for converting the current signal to a voltage signal (for example, in order to convert a 4-20mA signal to 1-5V, a 250 Ohm resistor would be used). External communicator 212 is used when displacement converter 200 transmits data externally. External pressure measuring unit 231 serves to measure pressure in cases such as when a known pressure or the like is being applied from outside to sensor 201. Temperature detector 214 is arranged on displacement converter 200 to perform temperature correction and the like for displacement converter 200.

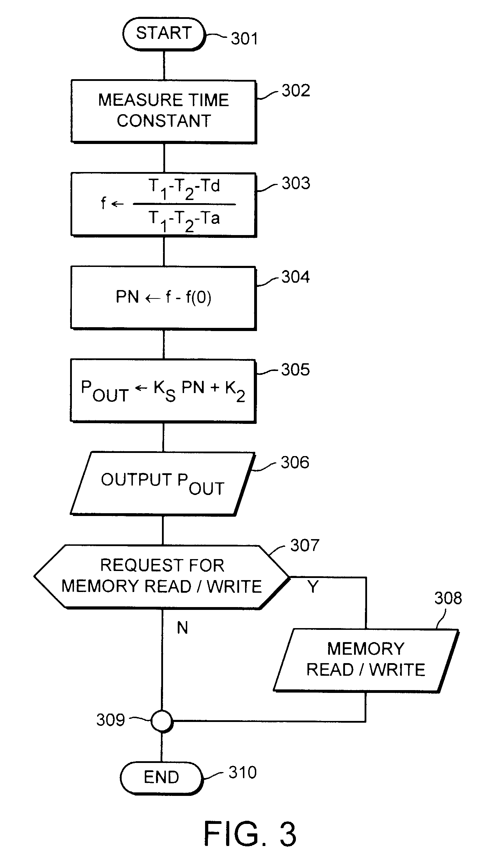

Figure 3 shows the operations flow of microprocessor 205 when this embodiment is outputting a linear signal (i.e. in measurement mode with pressure difference P). Steps 301-310 represent steps in this flow. At step 302, microprocessor 205 controls the time constant measuring unit 202, A/D converter 203 and time counter 206 in order to determine times T1 and T2 which are in proportion to capacitances C1 and C2 of the sensor capacitors.

Times T1 and T2 can be determined by using, for example, the method shown in a previous application by the present applicant (Japanese laid-open publication number 4-257430). In this method, a sensor capacitor is charged by a prescribed voltage from a power source via a prescribed resistance, and the time it takes for the capacitor to be charged to a prescribed threshold level is measured.

In another possible method, disclosed by the present applicant in Japanese laid-open publication number 5-66168, instead of determining times T1 and T2, one of the following are determined to obtain T1 and T2: (T1-T2) and (T1+T2); (T1+T2) and T1 or T2; (T1-T2) and T1 or T2.

In the next step, step 303, the reference operation noted in operation (17) (shown below) is performed using time constants Td and Ta in memory 204.$\text{f=(T1-T2-Td)/(T1+T2-Ta)}$

In the next step, step 304, constant f(0) (f when pressure difference is 0 percent) in memory 204 is used to determine PN, the difference between f and f(0). In the next step, step 305, KS (the span coefficient) and KZ (the zero coefficient) in memory 204 are used in operation (18) to perform the operations for the output signal for the process handling the pressure difference measurement. In step 306, the result from this, converter output Pₒᵤₜ, is sent to D/A converter 207.${\text{P}}_{\text{out}} \text{=KS*PN+KZ}$

The calculation in operation (18) provides an output signal Pₒᵤₜ that is linear to pressure difference P. For example, referring to Figure 2, assuming the current signal from V/I converter 209 corresponding to a pressure difference P of 0-100 percent is 4-20mA, when P=0% (i.e. f=f(0) and PN=0), zero coefficient ZK is the signal element sent to D/A converter 207 so that the current signal from V/I converter 209 is 4mA. Span coefficient KS is the signal element sent to D/A converter 207 so that the difference in the current signal from V/I converter 209 from when P=100% and P=0% is 16mA.

In the next step, step 307, if there is a read/write request for memory 204 from external communicator 212 (e.g. reading T1, T2, writing Td, Ta, and the like), the read/write operation is performed on memory at step 308.

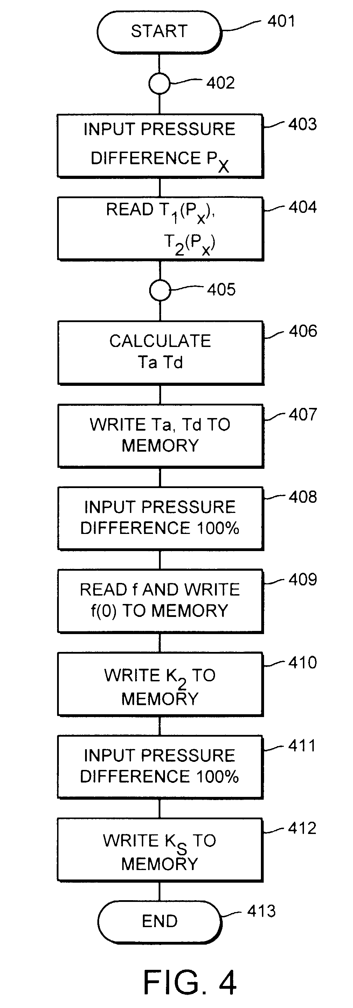

Figure 4 is a flowchart of steps 401-413 indicating the sequence of operations of microprocessor 205 during output adjustment (calibration) of displacement converter 200. In steps 402-405, data required for the aforementioned constants Td, Ta, which are necessary for linear correction, are retrieved. At step 403, applied pressure difference Px (where X is the parameter representing the number of the measurement point) is sent to sensor 201. At step 403 and step 404, detected time values T1(Px), T2(Px), which are proportional to capacitances C1, C2 of the sensor capacitors, are read from time measuring unit 202. This operation is repeated for values of X from 0 to n.

Examples of the types of measurement points include:
1) five points, where pressure difference Px is -100, -50, 0, 50, 100%;
2) four points with 0, 25, 50, 100%;
3) three measurement points for both positive and negative pressure differences, as noted previously (a total of 6 points).

In step 404, referred to above, if displacement conversion takes place by determining the sum and difference of the capacitances C1 and C2 of the sensor capacitors, a read of T1(Px)+T2(Px) and T1(Px)-T2(Px) is performed. If the displacement conversion takes place by determining either capacitance C1 or C2 and the sum of the capacitances C1 and C2, or by determining either capacitance C1 or C2 and their difference, then a read of T1(Px) or T2(Px) and T1(Px)+T2(Px) is performed, or a read of T1(Px) or T2(Px) and T1(Px)-T2(Px) is performed. At step 406, constants Ta, Td noted above are calculated, and at step 407, the values for Ta and Td are written to memory 204.

In the calculation at step 406, if five measurement points (-100, -50, 0, 50, 100%) are used for pressure difference Px as noted in (1) above, Ta and Td are determined so that they satisfy the following equations:$\text{f(+100)-f(+50)=f(+50)-f(0)}$$\text{f(-100)-f(-50)=f(-50)-f(0)}$

If four measurement points (0, 25, 50, 100%) are used for pressure difference Px as noted in (2) above, Ta and Td are determined so that they satisfy the following equations:$\text{f(100)-f(50)=f(50)-f(0)}$$\text{f(50)-f(25)=f(25)-f(0)}$

If six measurement points are used, as noted in (3) above, operations (13) and (16) would be used.

In step 406, it would also be possible to perform the calculations of constants Ta and Td outside the displacement converter 200 instead of having the microprocessor 205 perform them. Then, at step 407, the microprocessor 205 would read in the results of the calculations as Ta and Td, and would write these results to memory 204.

Next, steps 408-410 perform zero-adjustments. At step 408, differential pressure 0% is input. At step 409, the detected time values, T1(0), T2(0) and constants Ta, Td stored in memory 204 are used in operation (17) to determine function f(0). This value is written to memory 204 as a constant. As a result, with pressure difference P=0%, operation (18) shows that PN=f-f(0)=0. Therefore Pₒᵤₜ=KZ. At step 410, zero coefficient KZ is set so that converter output Pₒᵤₜ is set at a desired value (e.g. 4mA), and KZ is written to memory 204.

Next, in steps 411 and 412, span adjustment is performed. At step 411, a differential pressure of 100% is entered. The detected time values, T1(100), T2(100) and constants Ta, Td stored in memory 204 are used in operation (17) to determine f(100). From this can be obtained PN=f(100)-f(0). Using this and the aforementioned zero coefficient KZ, span coefficient KS is determined so that converter output Pₒᵤₜ=KS∗PN+KZ can be a determined value (e.g. 20mA). At step 412, the coefficient is written to memory 204.

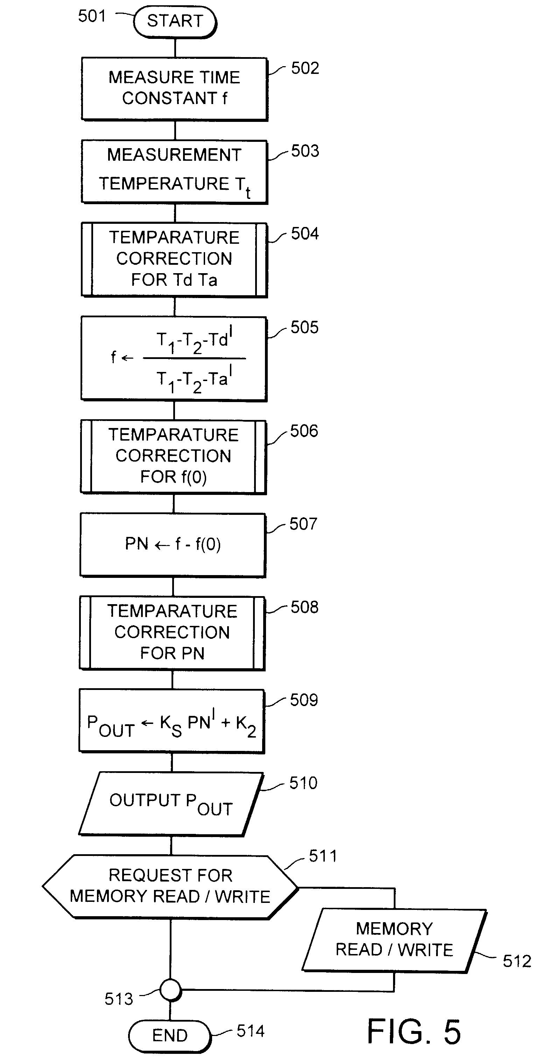

Figure 5 is a flowchart indicating the operations of microprocessor 205 when displacement converter 200 is outputting linear converter output Pₒᵤₜ, which has been temperature-corrected. Steps 501-514 indicate this process. At step 502, microprocessor 205 controls time constant measuring unit 202, A/D converter 203 and timer counter 206. Also, time values T1, T2 proportional to capacitances C1 and C2 of the sensor 201 capacitors are determined. At step 503, temperature TT is measured with temperature detector 214. At step 504, constants Td and Ta that correspond to the current temperature TT are determined using a data table previously stored in memory 204. This data table contains constants Tdi and Tai for temperatures TTi (the "i" in TTi, Tdi and Tai is a parameter indicating the temperature range of TT, Td and Ta).

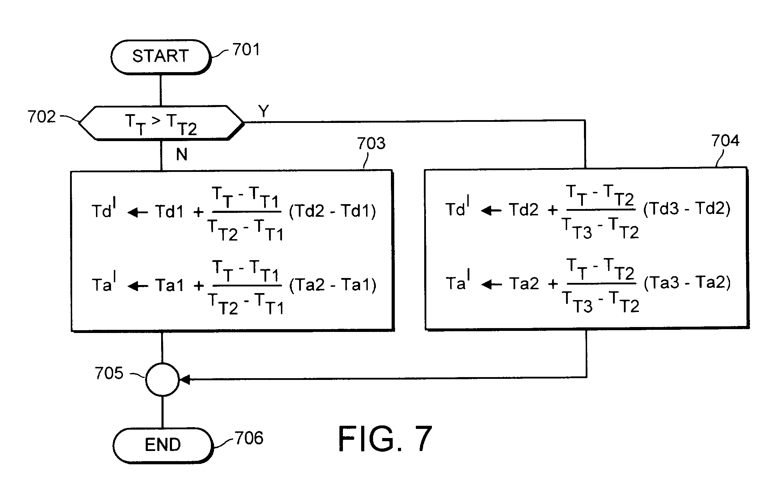

Figure 7 shows an example of the operations procedure for temperature correction. Steps 701-706 perform this procedure. In this example, it is assumed that the data table in memory 204 contains constants (Td1, Td2, Td3 and Ta1, Ta2, Ta3) for the three temperatures for parameters i=1, 2, 3 (TT1, TT2, TT2, where TT1<TT2<TT3). Temperature correction values Td' and Ta', which approximate constants Td and Ta, are determined by performing linear approximations between temperatures TT3-TT2 or temperatures TT2-TT1 (steps 703, 704) depending on whether measured temperature TT is greater or less than measured temperature TT2 (step 702).

Returning to Figure 5, at step 505, detected time values T1, T2 and constants Td' and Ta', obtained from step 504, are used to determine function f.

In the next step, step 507, constant f(0) (the f value when differential pressure is 0%), previously stored in memory by temperature, is used to determine f(0)' as a value for constant f(0) corresponding to the current measured temperature TT.

In the next step, step 507, temperature correction for the zero point is performed by setting PN to the difference between f and f'(0). In the next step, step 508, operation (23) below is used to perform temperature correction on the span corresponding to the PN value.$\text{PN'=PN*PN100(TT1)/[(PN100(TT2)-PN100(TT1))(TT-TT1)/(TT2-TT1)+PN100(TT1)]}$

PN100(TT1) and PN100(TT2) are values of PN when input is 100% at temperatures TT1 and TT2, which were previously set. Temperature TT1 is the temperature for which adjustments to zero coefficient KZ and span coefficient KS are performed (this is called the reference temperature). The above equation is the equation for when TT<=T2. If TT>T2, then TT1 and TT2 in operation (23) are reversed.

In the next step, step 509, temperature-corrected converter output Pₒᵤₜ is determined using operation (24) below. At step 510, the resulting Pₒᵤₜ is sent to D/A converter 207.${\text{P}}_{\text{out}} \text{=KS*PN'-KZ}$

If, at step 511, a memory read/write is requested by the external communicator 212, step 512 performs a read/write operation (e.g. a read of T1, T2, a write of Td, Ta).

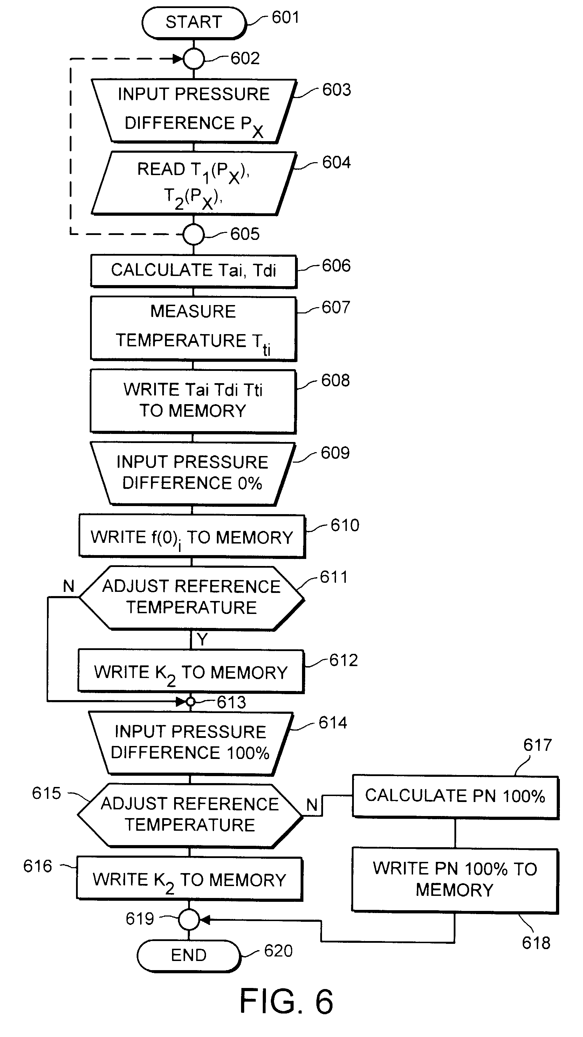

Figure 6 is a flowchart indicating an embodiment of the operations performed by microprocessor 205 when the output from displacement converter 200 is adjusted (calibrated) so that temperature correction is possible. Steps 601-620 perform this operation. In this case, temperature TTi is changed to a number of preset temperature points within a certain range (the "i" in TTi is a parameter indicating the number of the point). For each case (i.e. for each temperature point), a constant is determined according to the procedure in Figure 6 and stored.

In Figure 6, assuming that the temperature is at one of the above temperature points, steps 602-605 collect the data necessary for calculating the linear correction constants Tdi and Tai. Next, at step 606, the linear correction constants Tdi and Tai for that temperature are calculated. The operation in steps 602-606 above are identical to steps 402-406 in Figure 4.

Next, at step 607, current temperature data TTi is measured using temperature detector 214. Next, at step 608, Tdi, Tai and TTi are written to memory 204. At step 609, assuming the input pressure difference to be 0%, f(0) is measured and is written to memory 204 at step 610.

Next, at step 612, zero coefficient KZ is written to memory 204 only if the temperature is the reference temperature (step 611, branch Y). Next, at step 614, the input pressure difference is set to 100%, If the temperature is the reference temperature (step 615, branch Y), span coefficient KS is written to memory 204 at step 616. Meanwhile, if the temperature is not the reference temperature (step 615, branch N), PN100i is calculated as the PN value in this case at step 617. At step 618, PN100i is written to memory 204.

In prior art, hardware methods have been used in displacement converters to correct the floating capacitance contained in capacitances C1, C2 of the sensor capacitors. In the present invention, it is possible to perform linear, zero and span adjustments of a displacement converter easily and accurately. This is done by using capacitances C1(P), C2(P), previously measured for a plurality of measurement points with known pressure difference P, in order to calculate constants α and β, which relate to the floating capacitance appearing at prescribed coefficient value f(P). Then, these constants are used to determine a function f based on the capacitance for the pressure difference, and the pressure difference is calculated and output. Thus, the floating capacitance is corrected using a "software method."

The present invention performs the above corrections for predetermined temperature points beforehand, stores constants for each of these temperature points, measures the temperature as well as the sensor capacitor capacitance values when the pressure difference is measured, and uses the temperature-corrected constant to calculate and output the pressure difference. This provides a displacement converter having good linear, zero and span temperature properties.

## Claims

1. A method for measuring pressure difference by detecting very small displacements of a diaphragm (1) caused by the pressure difference and expressed as a change in capacitance in a pair of capacitors formed by the diaphragm and a pair of fixed electrodes (3, 4) arranged so as to face either side of the diaphragm, characterised by the steps of:
an initial calibration phase comprising:
determining the values corresponding to capacitances C1(P) and C2(P) of the pair of capacitors for a range of known positive and/or negative pressure differences P;
calculating constants α and β using the determined capacitance values and pressure differences and the relationship:$\text{f(P)={C1(P)-C2(P)-α}/{C1(P)+C2(P)-β};}$
calculating the constants f(0) and KP using the determined capacitance values and pressure differences and the relationship:$\text{f(P)=KP*P+f(0);}$
and a subsequent measurement phase comprising employing the calculated constants α, β, f(0) and KP and values of the capacitances C1(P) and C2(P) determined in the measurement phase in the relationships:$\text{f(P)={C1(P)-C2(P)-α}/{C1(P)+C2(P)-β}}$ and$\text{f(P)=KP*P+f(0)}$ to determine the pressure difference P.

2. A device for measuring pressure difference by detecting very small displacements of a diaphragm (1) caused by the pressure difference and expressed as a change in capacitance in a pair of capacitors formed by the diaphragm and a pair of fixed electrodes (3, 4) arranged so as to face either side of the diaphragm, characterised by:
means for calibrating the device comprising:
means for determining values corresponding to the capacitances C1(P) and C2(P) of the pair of capacitors for a range of known positive and/or negative pressure differences P;
first calculating means for calculating constants α
and β using the determined capacitance values and pressure differences and the relationship:$\text{f(P)={C1(P)-C2(P)-α}/{C1(P)+C2(P)-β};}$ second calculating means for calculating the constants f(0) and KP using the determined capacitance values and pressure differences and the relationship:$\text{f(P)=KP*P+f(0);}$
and means (213) for measuring pressure difference P employing the calculated constants α, β, f(0) and KP and measured values of the capacitances C1(P) and C2(P) in the relationships:$\text{f(P)={C1(P)-C2(P)-α}/{C1(P)+C2(P)-β}}$ and$\text{f(P)=KP*P+f(0)}$ to determine the pressure difference P.

3. A device as claimed in claim 2 and including means for determining a difference and a sum of the capacitance values of the pair of capacitors and for determining the capacitance value of each of the capacitors.

4. A device as claimed in claim 2 and including means for determining a difference or a sum of the capacitance values of the pair of capacitors and for determining the capacitance value of one of the capacitors.

5. A device as claimed in claim 2, 3 or 4 and including temperature detecting means (214), the means for calculating the constants α and β including means for calculating the constants for each of a plurality of temperatures and the means for measuring pressure difference including means for employing the values for α and β corresponding to the detected temperature.

6. A device as claimed in any one of claims 2 to 5 and including temperature detecting means (214), the means for calculating the constants f(0) and KP including means for calculating the constants for each of a plurality of temperatures and the means for measuring pressure difference including means for employing the values for f(0) and KP corresponding to the detected temperature.

7. A device as claimed in any one of claims 2 to 6, wherein each means other than the first calculating means is assembled as an integral device (205).

## Patentansprüche

1. Verfahren zur Messung einer Druckdifferenz durch Erfassen von sehr kleinen Verschiebungen einer Membran (1), welche durch die Druckdifferenz verursacht werden und als Änderung der Kapazität in einem Paar von Kondensatoren ausgedrückt werden, welche durch die Membran und ein Paar von ortsfesten Elektroden (3, 4), die so angeordnet sind, daß sie beiden Seiten der Membran zugewandt sind, gebildet werden, gekennzeichnet durch die Schritte:
eine anfängliche Kalibrierungsphase, welche umfaßt:
Ermitteln der Werte, die den Kapazitäten C1(P) und C2(P) des Paars von Kondensatoren entsprechen, für einen Bereich von bekannten positiven und/oder negativen Druckdifferenzen P;
Berechnen von Konstanten α und β unter Verwendung der ermittelten Kapazitätswerte und Druckdifferenzen und der Beziehung:$\text{f(P) = {C1(P)-C2(P)-α}/{C1(P)+C2(P)-β};}$
Berechnen der Konstanten f(O) und KP unter Verwendung der ermittelten Kapazitätswerte und Druckdifferenzen und der Beziehung:$\text{f(P)= KP*P+f(0);}$
und eine anschließende Meßphase, umfassend die Verwendung der berechneten Konstanten α, β, f(0) und KP und der Werte der Kapazitäten C1(P) und C2(P), die in der Meßphase ermittelt wurden, in den Beziehungen:$\text{f(P) = {C1(P)-C2(P)-α}/{C1(P)+C2(P)-β}}$ und$\text{f(P) = KP*P+f(0),}$ um die Druckdifferenz P zu ermitteln.

2. Instrument zur Messung einer Druckdifferenz durch Erfassen von sehr kleinen Verschiebungen einer Membran (1), welche durch die Druckdifferenz verursacht werden und als Änderung der Kapazität in einem Paar von Kondensatoren ausgedrückt werden, welche durch die Membran und ein Paar von ortsfesten Elektroden (3, 4), die so angeordnet sind, daß sie beiden Seiten der Membran zugewandt sind, gebildet werden, gekennzeichnet durch:
eine Vorrichtung zur Kalibrierung des Instruments, welche umfaßt:
eine Vorrichtung zum Ermitteln der Werte, die den Kapazitäten C1(P) und C2(P) des Paars von Kondensatoren entsprechen, für einen Bereich von bekannten positiven und/oder negativen Druckdifferenzen P;
eine erste Berechnungsvorrichtung zum Berechnen von Konstanten α und β unter Verwendung der ermittelten Kapazitätswerte und Druckdifferenzen und der Beziehung:$\text{f(P)= {C1(P)-C2(P)-α}/{C1(P)+C2(P)-β};}$
eine zweite Berechnungsvorrichtung zum Berechnen der Konstanten f(O) und KP unter Verwendung der ermittelten Kapazitätswerte und Druckdifferenzen und der Beziehung:$\text{f(P) = KP*P+f(0);}$
und eine Vorrichtung (213) zum Messen der Druckdifferenz P, welche die berechneten Konstanten α, β, f(0) und KP und die gemessenen Werte der Kapazitäten C1(P) und C2(P) in den Beziehungen:$\text{f(P) = {C1(P)-C2(P)-α}/{C1(P)+C2(P)-β}}$ und$\text{f(P) = KP*P+f(0)}$ verwendet, um die Druckdifferenz P zu ermitteln.

3. Instrument nach Anspruch 2, das eine Vorrichtung zum Ermitteln einer Differenz und einer Summe der Kapazitätswerte des Paars von Kondensatoren und zum Ermitteln des Kapazitätswerts von jedem der Kondensatoren umfaßt.

4. Instrument nach Anspruch 2, das eine Vorrichtung zum Ermitteln einer Differenz oder einer Summe der Kapazitätswerte des Paars von Kondensatoren und zum Ermitteln des Kapazitätswerts von einem der Kondensatoren umfaßt.

5. Instrument nach Anspruch 2, 3 oder 4, das eine Temperaturerfassungsvorrichtung (214) aufweist, wobei die Vorrichtung zur Berechnung der Konstanten α und β eine Vorrichtung zur Berechnung der Konstanten für jede von einer Vielzahl von Temperaturen umfaßt und die Vorrichtung zum Messen der Druckdifferenz eine Vorrichtung zur Verwendung der Werte für α und β entsprechend der erfaßten Temperatur umfaßt.

6. Instrument nach irgendeinem der Ansprüche 2 bis 5, das eine Temperaturerfassungsvorrichtung (214) aufweist, wobei die Vorrichtung zur Berechnung der Konstanten f(0) und KP eine Vorrichtung zur Berechnung der Konstanten für jede von einer Vielzahl von Temperaturen umfaßt und die Vorrichtung zum Messen der Druckdifferenz eine Vorrichtung zur Verwendung der Werte für f(0) und KP entsprechend der erfaßten Temperatur umfaßt.

7. Instrument nach irgendeinem der Ansprüche 2 bis 6, wobei jede Vorrichtung außer der ersten Berechnungsvorrichtung als einteilige Vorrichtung (205) aufgebaut ist.

## Revendications

1. Procédé de mesure d'une différence de pression en détectant de très petits déplacements d'un diaphragme (1) provoqués par la différence de pression et exprimés sous la forme d'un changement de capacité d'une paire de condensateurs formée par le diaphragme et une paire d'électrodes fixes (3, 4) agencées de manière à faire face à l'un des côtés du diaphragme, caractérisé par les étapes suivantes :
une phase d'étalonnage initiale comportant les étapes consistant à :
déterminer les valeurs correspondant à des capacités C1(P) et C2(P) de la paire de condensateurs pour une plage de différences de pression connues positives et/ou négatives P,
calculer des constantes α et β en utilisant les valeurs de capacité et les différences de pression déterminées et la relation :$\text{f(P) = {C1(P) - C2(P) - α}/{C1(P) + C2(P) - β},}$
calculer les constantes f(O) et KP en utilisant les valeurs de capacité et les différences de pression déterminées et la relation :$\text{f(P) = KP * P + f(0),}$
et une phase de mesure ultérieure comportant l'étape consistant à utiliser les constantes calculées α, β, f(O) et KP et les valeurs des capacités C1(P) et C2(P) déterminées dans la phase de mesure dans les relations :$\text{f(P) = {C1(P) - C2(P) - α}/{C1(P) + C2(P) - β}}$ et$\text{f(P) = KP * P + f(0)}$ pour déterminer la différence de pression P.

2. Dispositif de mesure d'une différence de pression en détectant de très petits déplacements d'un diaphragme (1) provoqués par la différence de pression et exprimés sous la forme d'un changement de capacité d'une paire de condensateurs formée par le diaphragme et une paire d'électrodes fixes (3, 4) agencées de manière à faire face à l'un des côtés du diaphragme, caractérisé par :
des moyens pour étalonner le dispositif comportant :
des moyens pour déterminer des valeurs correspondant aux capacités C1(P) et C2(P) de la paire de condensateurs pour une plage de différences de pression connues positives et/ou négatives P,
des premiers moyens de calcul pour calculer des constantes α et β en utilisant les valeurs de capacité et les différences de pression déterminées et la relation :$\text{f(P) = {C1(P) - C2(P) - α}/{C1(P) + C2(P) - β},}$
des seconds moyens de calcul pour calculer les constantes f(0) et KP en utilisant les valeurs de capacité et les différences de pression déterminées et la relation :$\text{f(P) = KP * P + f(0),}$
et des moyens (213) pour mesurer une différence de pression P en utilisant les constantes calculées α, β, f(O) et KP et des valeurs mesurées des capacités C1(P) et C2(P) dans les relations :$\text{f(P) = {C1(P) - C2(P) - α}/{C1(P) + C2(P) - β}}$ et$\text{f(P) = KP * P + f(0)}$ pour déterminer la différence de pression P.

3. Dispositif selon la revendication 2, comportant des moyens pour déterminer une différence et une somme des valeurs de capacité de la paire de condensateurs et pour déterminer la valeur de capacité de chacun des condensateurs.

4. Dispositif selon la revendication 2, comportant des moyens pour déterminer une différence ou une somme des valeurs de capacité de la paire de condensateurs et pour déterminer la valeur de capacité de l'un des condensateurs.

5. Dispositif selon la revendication 2, 3 ou 4, comportant des moyens de détection de température (214), des moyens pour calculer les constantes α et β comportant des moyens pour calculer les constantes pour chaque température d'une pluralité de températures et les moyens pour mesurer une différence de pression comportant des moyens pour utiliser les valeurs de α et β correspondant à la température détectée.

6. Dispositif selon l'une quelconque des revendications 2 à 5, comportant des moyens de détection de température (214), les moyens pour calculer les constantes f(0) et KP comportant des moyens pour calculer les constantes pour chaque température d'une pluralité de températures et les moyens pour mesurer une différence de pression comportant des moyens pour utiliser les valeurs de f(0) et KP correspondant à la température détectée.

7. Dispositif selon l'une quelconque des revendications 2 à 6, dans lequel chacun des moyens autres que les premiers moyens de calcul est assemblé en tant que dispositif formant bloc unitaire (205).
